# EUROPÄISCHE PATENTSCHRIFT

(11) **EP 0 742 067 B1**
(45) Veröffentlichungstag und Bekanntmachung des Hinweises auf die Patenterteilung: **28.02.2001**
(21) Anmeldenummer: 96107057.0
(22) Anmeldetag: 06.05.1996
(51) Int. Cl.: B23D 63/04

(54) **Vorrichtung zum Schränken von Sägeblättern**
Device for setting saw blades
Dispositif pour avoyer les lames de scie

(30) Priorität: 12.05.1995 DE 19517482
(43) Veröffentlichungstag der Anmeldung: 13.11.1996
(73) Patentinhaber: Haas, Hans Robert, 42853 Remscheid (DE)
(72) Erfinder: Haas, Hans Robert, 42853 Remscheid (DE)
(74) Vertreter: Eichler, Peter, Dipl.-Ing.

(56) Entgegenhaltungen:
- DE-A- 3 626 068
- DE-C- 470 527
- DE-U- 8 627 736

## Beschreibung

Die Erfindung betrifft eine Vorrichtung zum Schränken von Sägeblättern mit jeweils beidseits des Sägeblatts angeordneten, das Sägeblatt unterhalb der Zahnfußlinie einspannenden Spannköpfen sowie oberhalb der Zahnfußlinie aus beiden Richtungen quer zum Sägeblatt gegen die Zähne beweglichen Schränkeisen.

Derartige Vorrichtung ist bekannt aus DE-GM 86 27 736.

Bei dieser Vorrichtung werden die Schränkeisen mit ihren Kopfflächen seitlich an das eingespannte Sägeblatt herangefahren. Danach werden die Schränkeisen gegensinnig zueinander verdreht und nehmen mit ihrem wechselseitig aufeinander folgenden Kopfflächen die jeweils unmittelbar benachbarten Zähne auf ihrem Schränkweg mit.

Danach werden die Schränkeisen soweit auseinander gefahren, daß nach Lösen der Spannköpfe das Sägeband behinderungsfrei an den Schränkköpfen vorbeigefahren werden kann, bis die nächste Verzahnungsgruppe am Sägeband verschränkt werden kann.

Derartige Maschine hat sich in der Praxis sehr gut bewährt. Es zeigt sich aber, daß hohe Schränkgeschwindigkeiten nur mit verringertem mechanischem Aufwand erzielbar sind.

Es ist zwar eine Schränkmaschine bekannt, bei welcher die Schränkeisen um einen außerhalb des Sägeblatts liegenden Drehpunkt gegen die Zähne verschwenkbar sind. Dabei kommen die Schränkeisen zunächst einmal seitlich an die noch aufrechtstehenden Zähne und drücken diese dabei aus der mittleren Sägeblattebene heraus. Durch Weiterverschwenken der Schränkeisen werden die Zähne dann gezwungen auszuweichen, solange bis die Zähne den entsprechenden Schränkwinkel einnehmen.

Wesentlicher Nachteil dieser Vorrichtung liegt in dem zunächst nur punktuell möglichen Seitenkontakt zwischen Schränkeisen und Zahn. Die hiermit verbundene hohe Flächenpressung insbesondere im kritischen Anfangsstadium des Schränkvorgangs sorgt für eine Verdrückung des Sägezahns an der Seitenflanke. Hierdurch besteht die Gefahr, daß Schärfeverluste auftreten.

Weiterhin muß gesehen werden, daß bei diesem Verfahren die Kontaktzone zwischen Schränkeisen und Seitenflanke des zu verschränkenden Zahns sich von einer zunächst punktuellen Auflagefläche zu einer größeren Fläche verändert. Die hierbei auftretende Relativbewegung zwischen Schränkeisen und Zahnseitenflanke führt zu weiterem Schärfeverlust.

Weiter scheint mit dieser bekannten Schränkvorrichtung eine Genauigkeit von wenigen 1/100mm nicht einhaltbar, da während des Schränkvorgangs eine präzise Seitenführung der Zähne nicht stattfinden kann. Betrachtet man nämlich die so hergestellten Zähne im Querschnitt, so läßt sich eine eindeutige Biegelinie entlang derer die Zähne geschränkt sind, nicht feststellen. Vielmehr wird mit dieser Vorrichtung eine kontinuierliche Biegung, beginnend im Zahnfußbereich und endend im Kopfbereich, herbeigeführt, so daß allenfalls die Zahnspitzen innerhalb des vorgesehen Schränkwinkels liegen können.

Diese Nachteile werden zwar durch die Schränkvorrichtung nach dem eingangs erwähnten Gebrauchsmuster ohne weiteres beseitigt.

Es ist daher Aufgabe der Erfindung, eine Vorrichtung zum Schränken von Sägeblättern zu schaffen, mit welcher der Schränkvorgang unter Einsparung mechanischen Aufwandes im Genauigkeitsbereich von wenigen 1/100mm durchführbar ist.

Diese Aufgabe wird durch eine vorrichtung zum Schränken von Sägeblättern mit den Merkmalen gemäß Patentanspruch 1 gelöst ist.

Aus der Erfindung ergibt sich der Vorteil, daß die Schränkeisen nicht mehr für jeden Schränkvorgang in Richtung zum Sägeblatt zugestellt werden müssen. Dieser Vorteil wird dadurch erreicht, daß die Schränkeisen eine Grundstellung einnehmen, in welcher sie klemmfrei am Sägeblatt anliegen. Diese Grundstellung zeichnet sich wesentlich dadurch aus, daß das Sägeblatt ohne Zurückfahren der Schränkeisen in deren Grundstellung in Längsrichtung zwischen den Schränkeisen hindurch geführt werden kann. Dabei kann ohne weiteres ein geringer Kontakt zwischen den Schränkeisen und den Seitenwänden des Sägeblatts stattfinden. Wesentlich ist das klemmfreie Anlagern der Schränkeisen an das Sägeblatt.

In dieser klemmfreien Stellung werden die Schränkeisen jeweils gehalten, so daß das zwischen den Schränkeisen hindurch gefahrene Sägeblatt auch während des Transports nicht oder höchstens geringfügig mit den Kopfflächen der Schränkeisen in Kontakt gerät.

Zwar können die Schränkeisen prinzipiell senkrecht zur Sägeblattebene verfahrbar sein, um den Schränkvorgang auszuführen.

Eine bevorzugte Weiterbildung sieht jedoch vor, daß die Schränkeisen lediglich gegenläufige Schwenkbewegungen aus ihren Grundstellungen ausüben sollen. Hierzu wären die Schränkeisen auf einer z.B. kreisförmigen Schwenkbahn zu führen, und zwar zusammen mit den jeweils notwendigen Einspannvorrichtungen, welche die Schränkeisen in ihrer Grundstellung halten.

Eine bevorzugte Weiterbildung sieht vor, jedes Schränkeisen auf einer Kreisbahn zu führen. Hierfür wird vorgeschlagen, daß jedes Schränkeisen entlang einer Anlegelinie am Sägeband liegt und daß die Drehachse der Kreisbahn mit der Anlegelinie zusammenfällt. Eine mögliche Schränkvorrichtung mit diesen Merkmalen ist im eingangs genannten Gebrauchsmuster offenbart, worauf zur Vermeidung von Wiederholungen in vollem Umfang Bezug genommen wird.

Für die Erfindung kommen mehrere prinzipielle Lösungen in Betracht. Einerseits ist es möglich die Schränkeisen mit abgeschrägten Kopfflächen zu versehen. In diesem Falle wäre die Abschrägung so groß zu wählen, daß die bereits verschränkten Zähne des Sägeblatts berührungsfrei an den Kopfflächen vorbeifahren können, sobald die Schränkeisen in Grundstellung sind.

Darüber hinaus ist es möglich, die Schränkeisen über eine gestreckte "180° Grundstellung" hinaus soweit in Öffnungsrichtung verschwenkbar zu machen, daß danach ein berührungsfreies Vorbeifahren der bereits geschränkten Zähne an den Kopfflächen möglich ist.

Nach Möglichkeit sollte man darüber hinaus die Anlegelinie zwischen dem Schränkeisen und dem Sägeblatt in den Zahnfußbereich legen. Dies ist insbesondere dann von Vorteil, wenn das Sägeblatt bandförmig ist, weil dann die Verbindungslinie der Zahnfußbereiche geradlinig verläuft, so daß beim Schränken des Sägeblatts zusätzliche innere Spannungen im Zahnfußbereich vermieden werden.

Um darüber hinaus eine präzise vorgegebene Biegestellung im Zahnfußbereich zu erhalten, müssen die Spannköpfe möglichst dicht an die Kopfflächen der Schränkeisen herangeführt werden.

Will man den Kopfflächenwinkel des Schränkeisens nicht zu spitz werden lassen, was Stabilitätsprobleme mit sich führen könnte, wird für diesen Fall vorgeschlagen, die Oberseiten der Spannköpfe bezüglich der mittleren Sägeblattebene nach außen abfallen zu lassen. Damit schließen die Oberseiten der Spannköpfe mit der mittleren Sägeblattebene einen Winkel größer 90° ein. Die Schränkeisen können deshalb über den 180° -gestreckten Zustand hinaus soweit zurückgeschwenkt werden, daß danach die verschränkten Zähne des Sägeblatts berührungsfrei an den Kopfflächen der Schränkeisen vorbeifahren können.

Eine bevorzugte Weiterbildung sieht vor, die Schwenkbewegung den Schränkeisen mittels elektromotorisch angetriebener Zahnriemen aufzuprägen. Der Vorteil besteht im wesentlichen in einem vollkommen spielfreien Antrieb der, entsprechenden Elektromotor vorausgesetzt, im Gradminutenbereich positionierbar ist.

Hierzu wird vorgeschlagen einen sogenannten Drehstrom-Servomotor zu verwenden, der von einem elektronischen Drehgeber angesteuert wird, wobei in einem Regelkreis die Istschwenkbewegung mit der Sollschwenkbewegung verglichen und ggfs. auf diese ausgeregelt wird.

Hierzu kann zusätzlich ein sogenannter Tachogenerator mit der Motorwelle drehgekoppelt sein, der ein von der Drehstellung abhängiges Signal erzeugt und auf diese Weise die Istschwenkbewegung erfaßt.

Obwohl auf diese Weise bereits der Schränkvorgang im 1/100mm-Bereich genau überwacht werden kann, wird im Hinblick auf noch präzisere Einhaltung der Toleranzen vorgeschlagen, zusätzlich zur Ist-Verschwenkung auch eine Dickenerfassung des Sägeblattes vorzunehmen. Insbesondere bei den Sägebändern kann es nämlich zu stoßseitig miteinander verbundenen Bandenden kommen. In diesen Bereichen treten insbesondere Dickenveränderungen des Bandes auf, welche die Präzision des Schränkvorgangs beeinträchtigen können. Um dennoch auch hier den Schränkwinkel möglichst genau innerhalb des vorgegebenen Sollwerts zu halten, kann die Dickenmessung des Sägeblattes in die Überwachung zum Ausregeln der Ist-Verschwenkung mit eingehen.

Darüber hinaus wird vorgeschlagen, im Rahmen einer zusätzlichen qualitätsverbessernden Maßnahme eine Fehlstellenüberwachung der Verzahnung durchzuführen. Treten Verzahnungsfehlstellen (z.B.Zahnfehler, Zahngruppenfehler) auf, soll die Vorrichtung zum Schränken ein Warnsignal erzeugen und/oder stillgesetzt werden.

Zur Vermeidung zusätzlichen mechanischen Aufwandes sowie im Rahmen weiterer Verbesserung der Genauigkeit können die Spannköpfe hydraulisch beaufschlagt werden. Hierdurch lassen sich Übertragungsmechanismen, Gestänge od.dgl. einsparen. Die flexiblen Hydraulikschläuche können in jedem Fall leicht von außen an die Spannköpfe herangeführt werden.

Eine weitere Erhöhung der Genauigkeit des Schränkvorgangs wird dadurch erreicht, daß Schränkvorrichtung und Sägeblatt bzw. Sägeband in Höhenrichtung relativ zueinander einstellbar sind. Auf diese Weise wird sichergestellt, daß die Anlagelinie des Schränkeisens mit der Fußlinie des zu schränkenden Zahns stets auch über mehrere Zähne hinweg übereinstimmt und dies über die gesamte Länge des Sägeblatts/Sägebandes.

Die erfindungsgemäße Vorrichtung zum Schränken eines Sägeblattes ist insbesondere geeignet zum Schränken von Sägebändern, die von einer Abwickelspule kommend abgezogen und hinter der Schränkvorrichtung einer Aufwickelspule zugeführt werden. Bevorzugt wird in diesem Falle das Sägeband hinter der Schränkeinrichtung durch eine Fördereinrichtung gezogen. Hierdurch ist ständige Straffung des Sägebandes sichergestellt. Dabei wird auch großer Wert auf die Relativpositionierung zwischen den Sägezähnen und den Kopfflächen der Schränkeisen gelegt, da diese nur im Bereich der Zähne am Sägeblatt liegen sollen.

Eine weitere Maßnahme zur Verbesserung der Präzision geschränkter Sägebänder kann im Rahmen entsprechender Weiterbehandlung nach dem Schränkvorgang einsetzen. Will man nämlich das geschränkte Sägeblatt unter Vermeidung eines Schärfeverlustes aufwickeln, empfiehlt es sich, zusätzlich zum Sägeband ein Trennmaterial mit aufzuwickeln, welches Trennmaterial wenigstens im Bereich der Sägezähne zwischen den aufeinander folgenden Wickelschichten des Sägebandes abgelegt ist. Hieraus ergibt sich der Vorteil daß ein Kontakt der im 1/100mm-Bereich scharf gefertigten und geschränkten Sägezahnflanken zur jeweils benachbarten Wickelschicht zuverlässig unterbunden wird. Derart abgelegte Sägebänder lassen sich daher erheblich härter wickeln. Da Dank dieser Weiterbildung der Erfindung ein Kontakt der empfindlichen Flanken der Sägezähne nicht mehr zu befürchten ist, kann die Aufwickelspannung höher gewählt werden als bislang üblich. Eine Relativbewegung zwischen zwei benachbarten Wickelschichten wird infolge der höheren Aufwickelspannung zusätzlich verringert, wenn nicht gar unterbunden.

Deshalb beruht diese Weiterbildung auf einem doppelten Effekt: Einerseits wird bereits durch die Zwischenlage des Trennmaterials ein Kontakt der Sägezahnflanken zur benachbarten Wickelschicht unterbunden. Andererseits wird die mögliche Relativbewegung zweier benachbarter Wickelschichten zueinander durch die höher mögliche Aufwickelspannung deutlich verringert. Die verbleibend mögliche Relativbewegung wird allerdings durch die Zwischenlage unschädlich gemacht.

Vorzugsweise ist das Trennmaterial bandförmig von etwa der Breite des Sägebandes, insbesondere jedoch ist das Trennmaterial zumindest im Bereich der Sägezähne abzulegen.

Dabei macht sich eine Weiterbildung der Erfindung zu Nutze, daß infolge der stets vorhandenen Aufwickelspannung zwischen zwei benachbarten Wickelschichten eine derart feste Anpressung gewährleistet ist, daß das dazwischen liegende Trennmaterial zuverlässig festgehalten wird. Einer Haftvermittlungsschicht bedarf es daher nicht.

Das Trennmaterial kann dem zur Aufwickelhaspel laufenden Sägeblatt prinzipiell an beliebiger Stelle zugeführt werden. Vorteilhaft ist jedoch die im wesentlichen zeitgleiche Aufwicklung des Sägebandes mit dem Trennband. Hierdurch wird eine so sichere Ablage des Trennbandes auf dem Wickel erzielt, daß zusätzliche Führungseinrichtungen zum Auflauf des Trennbandes auf den Wickel entbehrlich sind.

Vorzugsweise besteht das Trennmaterial aus einem papierartigen Band, wobei jedoch innerer Zusammenhalt und Materialdicke des Trennbandes so vorzusehen sind, daß auch bei fest aufgewickeltem Sägeband ein Durchdringen der Sägezähne durch das Trennband unterbleibt.

Eine bevorzugt verwendete Vorrichtung zur Herstellung eines Wickels nach dieser Erfindung geht aus von einer an sich bekannten Schränkmaschine. Hierbei wird das nichtverschränkte Sägeband von einer Abwickelhaspel abgezogen, durch die Schränkeinrichtung geführt und als verschränktes Sägeblatt der Aufwickelhaspel geführt. Zusätzlich wird nun eine abwickelbare Trennbandspule vorgesehen, von welcher das Trennband abgezogen und im wesentlichen zugleich mit dem Sägeband aufgewickelt wird. Bevorzugt ist die Achse der Trennbandspule parallel zur Achse der Aufwickelhaspel um ungewollte Changierbewegung des Trennbandes zu vermeiden. Dabei hat sich gezeigt, daß die Trennbandspule bevorzugt freidrehend gelagert werden kann, so daß das abgezogene Trennband ohne zusätzlichen Antrieb, sondern lediglich durch freien Abzug der bestimmungsgemäßen Verwendung zugeführt wird.

Im Falle, daß die Erfindung bei einer Härtevorrichtung verwendet wird, kommt das zu härtende Sägeband von einer Abwickelspule. Die Zähne sind bereits geschränkt. Daher soll die Zwischenlage nach dieser Erfindung bereits vorhanden sein. Das abgewickelte Sägeband wird daher unter gleichzeitiger Abwicklung der Zwischenlage von dieser getrennt und einer an sich bekannten Härteeinrichtung zugeführt. Ggfs. erfolgt dies unter vorheriger Umwicklung des Sägebandes. Eine Umwicklung kann erforderlich sein, wenn das Härten des Sägebandes nicht in der erforderlichen Richtung mit den Zähnen erfolgen würde. Im Falle, daß der Härtevorgang ohne vorheriges Umwikkeln durchgeführt werden kann, soll das Trennmaterial vom abgewickelten Sägeband getrennt und einer Speicherhaspel zugeführt werden, wo es separat aufgewickelt wird. Dies beruht auf der Erkenntnis, daß die Sägezähne nach dem Härten keiner körperlichen Trennung mehr bedürfen, da Beschädigungen der Seitenflanken nicht zu befürchten sind.

Das aufgewickelte Trennmaterial kann dann dem nächsten zu verarbeitenden Los zur Verfügung gestellt werden.

Für den Fall, daß das Sägeband vor dem Härtevorgang zunächst umgewickelt werden muß, kann das Trennmaterial zusammen mit dem Sägeband von der Ablaufspule abgezogen und der Auflaufspule zugeführt werden. Es bedarf daher keiner Zwischenspeicherung des Trennmaterials, sondern es erfolgt eine zeitgleiche Abwicklung und Aufwicklung von Trennmaterial und Sägeband.

Nachdem auf diese Weise die Laufrichtung der Zähne an den Härtevorgang angepaßt ist, lassen sich die Zähne wie vorstehend beschrieben von der Zahnrückenseite herkommend härten.

Im folgenden wird die Erfindung anhand von Ausführungsbeispielen näher erläutert. Es zeigen
- Fig. 1: eine erfindungsgemäße Schränkvorrichtung im Querschnitt,
- Fig.2: eine Prinzipskizze für einen Drehantrieb nach dieser Erfindung,
- Fig.3: einen hydraulischen Antrieb für Spannköpfe nach dieser Erfindung,
- Fig.4: eine Grenzlinienüberwachung der Ist-Verschränkung im Hinblick auf die Soll-Verschränkung,
- Fig.5: eine Zahnfehlstellenüberwachung,
- Fig.6: eine Dickenüberwachung des Sägeblatts im Bereich eines Stoßendes,
- Fig.7: Vorrichtung zum Schränken eines Sägebandes unter zugleicher Aufwickelung eines Trennbandes nach dem Schränken, und
- Fig.8: Querschnitt durch zwei aufeinander folgende Wikkelschichten bei einer Vorrichtung gemäß Fig.7,
- Fig. 9: eine Umwickelvorrichtung, und
- Fig.10: eine Härtevorrichtung.

Sofern im folgenden nicht anderes gesagt ist, gilt die folgende Beschreibung stets für alle Figuren.

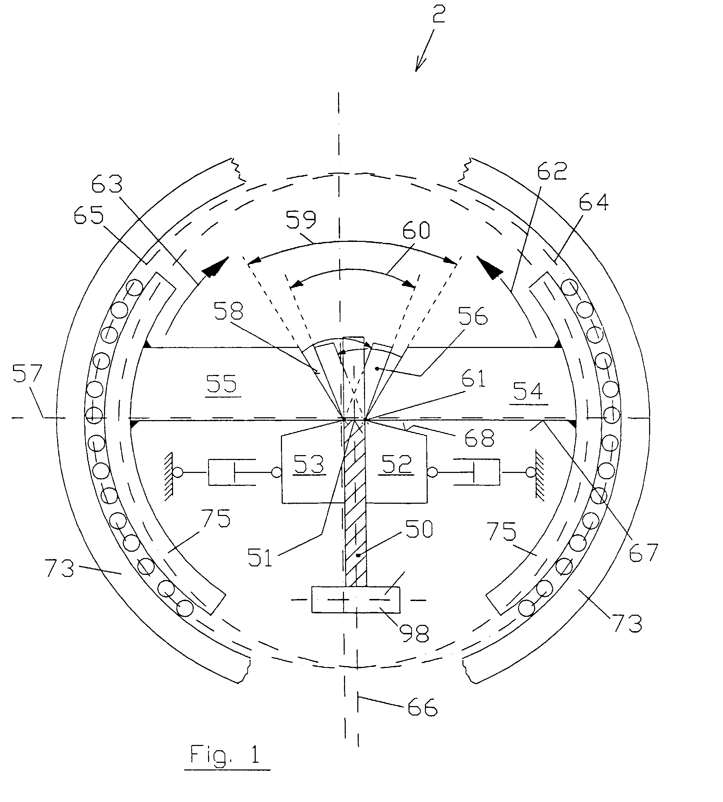

Insbesondere Fig.1 zeigt die Vorrichtung 2 zum Schränken von Sägeblättern nach dieser Erfindung. Im wesentlichen besteht derartige Vorrichtung aus beidseits des Sägeblatts 50 angeordneten Spannköpfen 52,53. Zwischen den Spannköpfen ist das Sägeblatt fest eingespannt. Nach Öffnen der Spannköpfe kann das Sägeblatt zwischen den Einspannflächen der Spannköpfe hindurch gezogen werden.

Auf ihrer Oberseite weisen diese Spannköpfe eine relativ scharfe Kante auf, mit der sie an der Zahnfußlinie 51 ihrer zugehörigen Sägeblattseite anliegen. Mittels einer geeigneten Höheneinstellvorrichtung 98, welche sich gegen die Unterseite des Sägeblatts 50 abstützt, läßt sich die Relativposition zwischen Zahnfußlinie 51 und Oberkante der Spannköpfe 52,53 so einstellen, daß die Oberkanten der Spannköpfe mit den zugehörigen Zahnfußlinien 51 zusammenfallen. Zusätzlich kann die Abwickelhaspel und/oder Aufwickelhaspel relativ zur Schränkvorrichtung höhenverstellbar sein.

Oberhalb der Zahnfußlinien 51 sind nun quer zum Sägeblatt 50 und gegen die Zähne 56 bewegliche Schränkeisen 54,55 vorgesehen.

Bekannterweise sind derartige Schränkeisen an ihren zum Sägeblatt weisenden Ende fingerförmig ausgebildet derart, daß die Finger der sich gegenüberliegenden Schränkeisen 54,55 wechselseitig aufeinander folgen um die aufeinander folgenden Zähne des Sägeblattes von beiden Seiten und gleichzeitig zu verschränken.

Wesentlich ist nun, daß die beiden Schränkeisen 54,55 beider Seiten in jeweils einer Grundstellung 57 gehalten werden. In dieser Grundstellung liegen beide Schränkeisen 54,55 klemmfrei an dem Sägeblatt an.

Es ist zwar ohne weiteres ein Berührungskontakt zwischen dem Sägeblatt 50 und der zugehörigen Kopffläche 58 des jeweiligen Schränkeisens 54,55 in der Grundstellung möglich. Der Kontakt beschränkt sich jedoch auf klemmfreies Anliegen. Klemmfrei im Sinne der vorliegenden Erfindung heißt, daß ein Vorwärtsfördern des Sägebandes 50 auch dann möglich ist, wenn sich die Schränkeisen 54,55 in ihrer Grundstellung befinden.

Weiterhin ist wesentlich, daß die beiden Schränkeisen 54,55 mit ihren den Zähnen 56 zugewandten Kopfflächen 58 zwischen sich einen Kopfflächenwinkel 59 einschließen, der grösser als oder höchstens gleich dem Schränkwinkel 60 ist, welcher die geschränkten Zähne 56 einhüllt.

Der Vorteil dieser Erfindung besteht in der geringen Zahl der notwendigen Freiheitsgrade für die Schränkeisen 54, 55.

Da sich in der Grundstellung 57 das Sägeband 50 bereits zwischen den Kopfflächen 58 der Schränkeisen hindurch fahren läßt, ist ein Linearantrieb zum Verfahren der Schränkeisen vom Sägeblatt weg nicht mehr nötig. Die Schränkeisen müssen daher lediglich noch auf einer Schwenkbahn um das Sägeblatt herumgeführt werden. Dabei kommt dem Merkmal "klemmfreies Anliegen" besondere Aufmerksamkeit zu. Prinzipiell ergibt sich das beste Schränkergebnis, wenn die beiderseitigen Schränkeisen 54,55 auf einer Kreisbahn um den jeweiligen Anlegepunkt 61 herumgeführt werden. Mit diesen Merkmalen ist eine Relativbewegung zwischen der Zahnseitenflanke und der Kopffläche 58 der Schränkeisen ausgeschlossen. Dieser Idealfall bedingt jedoch ein geommetrisch exaktes Zusammenfallen zwischen Drehachse des Schränkeisens und klemmfrei anliegendem Kopfstück. Im technischen Sinn bedeutet klemmfreies Anliegen daher ein Spiel zwischen Kopffläche 58 und Zahnseitenflanke in der Größenordnung von wenigen 1/100mm. Werden nun die beiderseitigen Schwenkbewegungen der Schränkeisen gegenläufig und zeitgleich ausgeführt, kann zusätzlich von symmetrisch in das Sägeblatt eingeleiteten Biegekräften ausgegangen werden, die sich in Bezug auf das ganze Sägeblatt gegenseitig aufheben.

Durch Zusammenfallen der Schwenkachse mit der Anlegelinie 61 im Zahnfußbereich können, wie gesagt, die Schwenkbewegungen 62,63 auf jeweils einer zum Anlegepunkt 61 des zugehörigen Schränkeisens konzentrischen Kreisbahn liegen.

Zu diesem Zwecke ist jedes Schränkeisen 54,55 auf einer kreisförmigen Führungsbahn 64,65 geführt. Es handelt sich beispielsweise um eine Wälzkörperlagerung die sich an einer ortsfesten Halterung 73 abstützt.

Weiterhin zeigt Fig.1, daß die den Zähnen 56 zugewandte Oberseite 68 jedes Spannkopfes mit der mittleren Sägeblattebene 66 einen Winkel größer als 90° einschließt, und daß die Schränkeisen 54,55 in der Grundstellung 57 mit ihren Unterseiten 67 im wesentlichen parallel zur jeweiligen Oberseite 68 des Spannkopfes liegen.

Es kann zwar ohne weiteres zwischen Oberseite des Spannkopfs und Unterseite des Schränkeisens ein gewisses Spiel vorgesehen sein. Wichtig ist jedoch, daß die Kopffläche des Schränkeisens und die Biegekante des Spannkopfes im wesentlichen im Bereich der Zahnfußlinie 51 angeordnet sind, um eine verzugsfreie Schränkung jedes einzelnen Zahnes 56 zu ermöglichen.

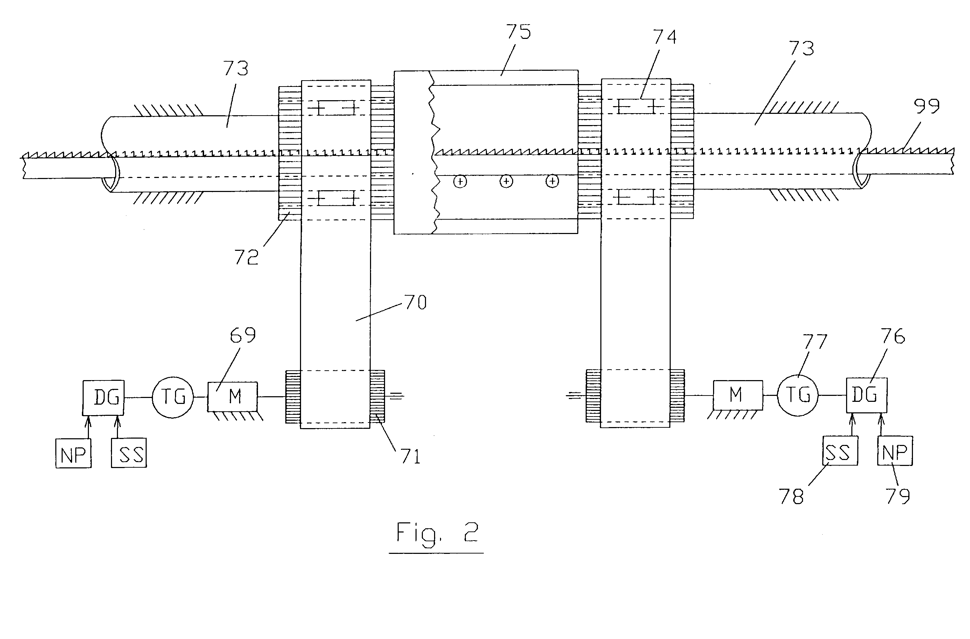

Darüber hinaus zeigt Fig.2 daß die beiden Schränktrommeln 75 von jeweils einem Elektromotor 69 über einen Zahnriementrieb 70 angetrieben werden.

Hierzu ist für jede der Schränktrommeln 75 (siehe auch Fig.1) ein ortsfest eingespanntes Halterohr 73 vorgesehen. Das freie Ende des Halterohres 73 trägt eine Lagerstelle 74, auf welcher das angetriebene Zahnriemenrad 72 drehbar gelagert ist. Drehfest mit dem angetriebenen Zahnriemenrad 72 ist dann jeweils eine der Schränktrommeln 75 verbunden.

Der endlos umlaufende Zahnriemen 70 wird über das antreibende Zahnriemenrad 71 gezogen. Dieses antreibende Zahnriemenrad 71 ist mit der Motorwelle des Elektromotors 69 verbunden. Es handelt sich hier um einen sogenannten Drehstrom-Servomotor. Um den jeweils vorgegebenen Schränkwinkel exakt einzuhalten ist ein Tachogenerator 77 mit der Motorwelle verbunden. Der Tachogenerator wird von einem Drehgeber 76 angesteuert. Der Drehgeber wird hinsichtlich der 0-Punkteinstellung von dem 0-Punktgeber 79 sowie hinsichtlich der Schränkbewegung von dem Schrittzahlgeber 78 angesteuert.

Die digitale Ansteuerung des Servomotors in Kombination mit dem schlupf- und spielfreien Zahnriementrieb gestattet bei hohen Schränkgeschwindigkeiten ein millimetergenaues Positionieren der Schränkeisen auf ihrer Kreisbahn um den Anlegepunkt 61 herum.

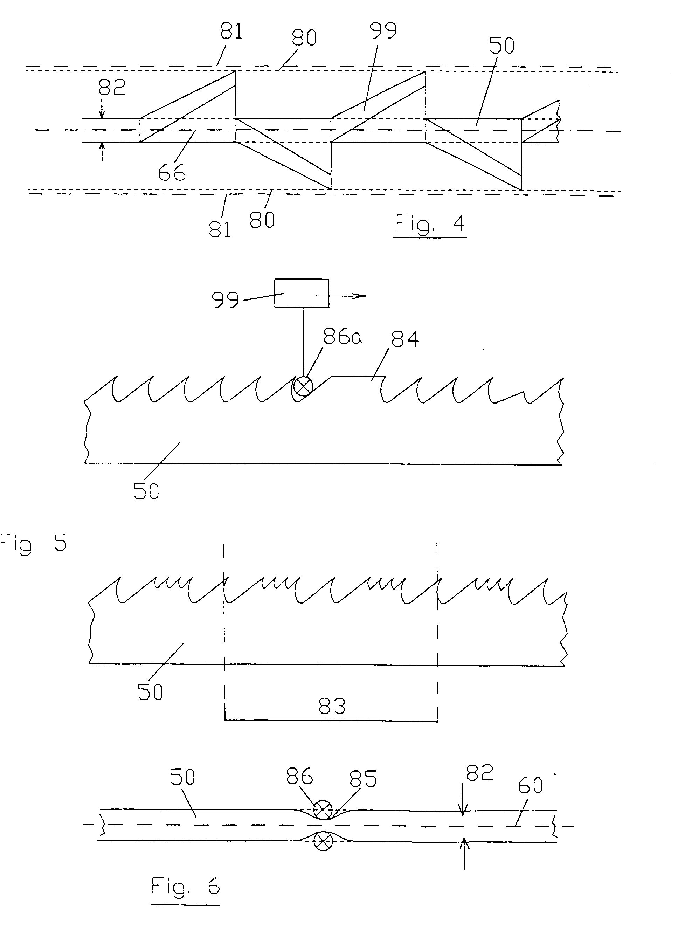

Weiterhin zeigt Fig.4 in Draufsicht auf das Sägeblatt 50 von oben, daß beidseits der mittleren Sägeblattebene 66 die Ist-Verschränkung 80 erfaßt und durch Vergleich mit einer vorgegebenen Soll-Verschränkung 81 ausgeregelt wird. Hierzu werden beidseits des Sägeblatts 50 Meßlinien 80 definiert. Diese Meßlinien sollen nach Möglichkeit mit den vorgegebenen Soll-Linien 81 deckungsgleich übereinstimmen.

Weicht dagegen die Ist-Verschränkung 80 von der Soll-Verschränkung 81 ab, muß der Schrittzahlgeber 78 entsprechend beeinflußt werden, um die beiderseitigen Linien 80,81 wieder zur Deckung zu bringen. Vorteilhaft erfolgt die Überwachung berührungslos, z.B. optoelektronisch. Die hierdurch erzielbaren Reaktionsgeschwindigkeiten und Nachstellzeiten sind vorteilhaft für die Qualität derartiger Sägeblätter. Darüber hinaus zeigt Fig.6 eine Vorrichtung zur Überwachung der Sägeblattdicke 82. Bekannterweise sind derartige Sägebänder endseitig miteinander verschweißt. Es kann daher im Bereich der Schweißstelle zu Dickenfehlstellen 85 kommen. Üblicherweise bestehen derartige Dickenfehlstellen 85 aus Einschnürungen. Ohne Beschränkung der Erfindung kann es sich jedoch auch um Verdickungen handeln.

Entlang der durch die vorgegebene Sägeblattdicke 82 feststehenden Begrenzungslinie des Sägeblattes 50 werden optoelektronische Augen 86 derart angebracht, daß die Grundrißlinie des Sägeblatts exakt vom Auge 86 erfaßt wird. Kommt es hingegen zu einer Dickenfehlstelle 85, kann über eine an sich bekannte Auswerteelektronik das Fehlstellen-Meßergebnis erfaßt und zu einem Warnsignal/Alarmsignal/Ausschaltsignal der Schränkmaschine verwendet werden.

Weiterhin zeigt Fig.5 eine Fehlstellenüberwachung hinsichtlich der Verzahnung. Sägebänder dieser Art weisen beispielsweise Zahngruppen 83 auf (untere Teilfig.5). Innerhalb der Gruppen können unterschiedliche Zahnformen bestehen. Die Zahngruppen 83 wiederholen sich jedoch fortwährend und aufeinander folgend. Man spricht von sogenannter Gruppenverzahnung. In gleicher Weise gilt dies für Einzelverzahnung entsprechend (obere Teilfig.5).

Beim Schränken derartiger Sägeblätter ist es daher wichtig, mit den fingerförmig ineinander greifenden Schränkeisen jeweils nur vorbestimmte Zähne der Zahngruppen 83 zu schränken. Tritt hingegen eine Zahnfehlstelle 84 auf, ist die Gefahr einer Beschädigung der Schränkvorrichtung/des Sägebandes nicht auszuschließen. Insbesondere werden die nachfolgenden Zahngruppen/Einzelzähne nicht mehr in der vorgesehenen Reihenfolge geschränkt. Aus diesem Grunde ist ein optoelektronisches Auge 86a vorgesehen, an welchem die Zähne des Sägebandes quer vorbeifahren. Das optoelektronische Auge wird daher von den vorbeifahrenden Zähnen beeinflußt. Der ausgesandte Lichtstrahl wird mit einer den Zahngruppen entsprechenden Frequenz unterbrochen. Tritt hingegen eine Zahnfehlstelle 84 auf, erfolgt eine unplanmäßig lange oder außerordentlich kurze Unterbrechung, je nachdem ob die Zahnfehlstelle massiv oder als Hohlstelle ausgeführt ist. Diese Abnormität kann über eine entsprechende Auswerteschaltung 99 erfaßt und zu einem Warnsignal/Alarmsignal/Stillsetzsignal der Schränkmaschine verwendet werden.

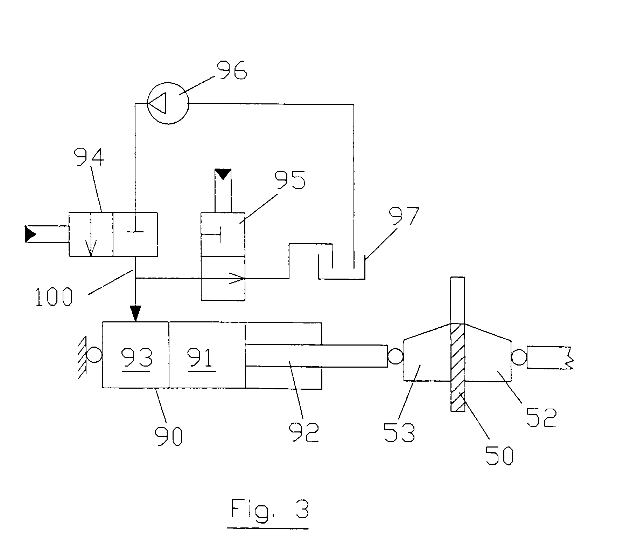

Darüber hinaus zeigt Fig.3 eine vorteilhafte Ansteuerung für die hydraulisch beaufschlagten Spannköpfe 52,53. Hierzu ist eine Kolbenzylindereinheit 90 vorgesehen, die sich an ihrem einen Ende ortsfest und an ihrem anderen Ende an dem zugehörigen Spannkopf 52 abstützt.

Innerhalb des Zylinders ist ein Kolben 91 verschiebbar geführt. Der Kolben 91 ist mit einer Kolbenstange 92 verbunden. Diese stützt sich gelenkig an dem Spannkopf 53 ab. Der Kolben schließt innerhalb des Zylinders einen Druckraum 93 ab. Dieser Druckraum ist mit einer hydraulischen Druckleitung 100 verbunden. Die hydraulische Druckleitung 100 wird über die Hydraulikpumpe 96 aus dem Tank 97 gespeist. Zu diesem Zweck ist ein erstes Wegeventil 94 vorgesehen. Das Wegeventil 94 sitzt zwischen Ausgang der Hydraulikpumpe 96 und der Druckleitung 100. Es handelt sich um ein 2/2-Wegeventil. In einer ersten Ventilstellung ist das Wegeventil 94 verschlossen. In einer zweiten Ventilstellung ist das Wegeventil 94 auf Durchgang geschaltet. Das Wegeventil kann beispielsweise elektrisch angesteuert sein. Von der Druckleitung abzweigend ist ein weiteres Wegeventil 95 in die zum Tank führende Leitung geschaltet. Dieses zweite Wegeventil 95 dient als Entlastungswegeventil. Es handelt sich ebenfalls um ein 2/2-Wegeventil. Die Vorsteuerung ist identisch der Vorsteuerung des ersten Wegeventils 94. Die Schaltstellungen des zweiten Wegeventils 95 sind jedoch zu den Schaltstellungen des ersten Wegeventils 94 invers.

Dies bedeutet, daß bei geschlossenem ersten Wegeventil 94 das zweite Wegeventil 95 geöffnet ist und umgekehrt. Daher kann der Druckraum 93 über die beiden möglichen Schaltstellungen der Wegeventile 94,95 entweder mit Druck beaufschlagt sein oder entlastet sein. Im Falle einer Druckbeaufschlagung schließen die Spannköpfe 52,53 das dazwischen befindliche Sägeblatt 50 fest zwischen sich ein. Im Falle der Entlastung gelangt eine geringfügige Menge Druckfluids aus dem Druckraum 93 über das Entlastungswegeventil 95 in den Tank. Dabei hebt der Spannkopf 53 geringfügig von dem Sägeblatt 50 ab und das Sägeblatt 50 kann zwischen den Spannköpfen um die Länge einer Schränkeisenbreite gefördert werden.

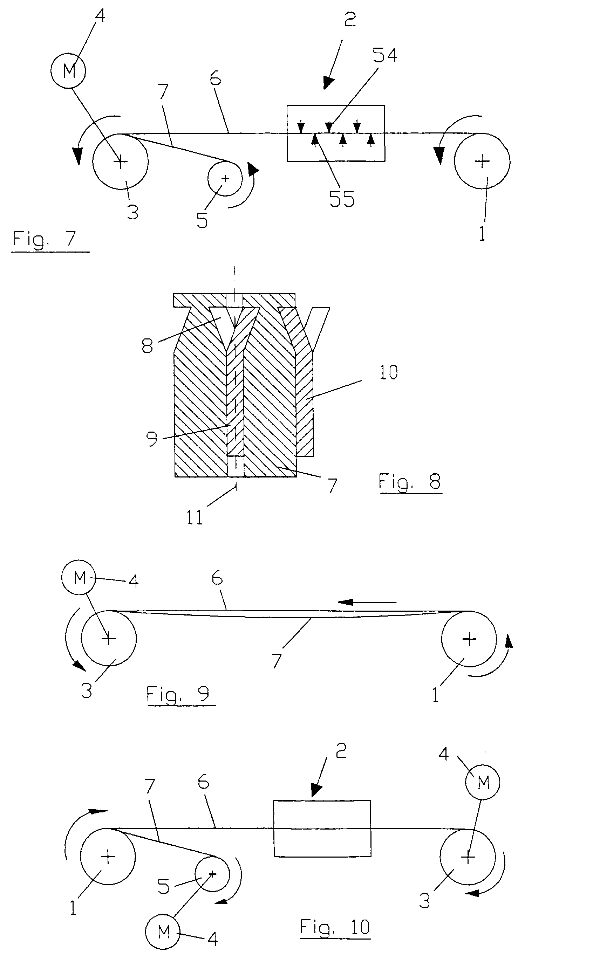

Ergänzend zum bisher Gesagten zeigen die Fig.7 und 8 die Erfindung in Zusammenwirken mit einer Vorrichtung zum Abwikkeln des ungeschränkten und Aufwickeln des geschränkten Sägebandes unter zugleicher Mitaufwicklung eines Trennbandes.

Hierzu wird von einer Abwickelspule 1 das aufgespulte Sägeband abgezogen und der Schränkeinrichtung 2 im stetigen Durchlauf zugeführt. Dort werden die bereits vorhandenen Zähne am Sägeband geschränkt. Alternativ kann es sich auch um eine Härtevorrichtung 2 handeln, in welcher die Zähne z.B. durch Vakuumhärtung gehärtet werden (Fig.10).

Nachdem die Zähne geschränkt worden sind, wird das Sägeband der Aufwickelhaspel 3 zugeführt. Die Aufwickelhaspel 3 wird motorisch angetrieben. Hierzu dient der Antriebsmotor 4, der mit der Drehachse der Aufwickelhaspel 3 gekoppelt ist.

Wesentlich ist nun, daß eine Trennbandspule 5 vorgesehen ist. Die Trennbandspule weist ein bandförmig aufgewickeltes Trennmaterial auf. Die Breite des Trennmaterials ist mindestens so breit wie der Bereich der Sägezähne, vorzugsweise etwa gleich der Breite des Sägebandes. Die Trennbandspule 5 ist frei drehend gelagert. Ggfs. kann die Trennbandspule auch gebremst sein. Das Trennband wird in den Zwickel zwischen dem zugeführten Sägeband und dem bereits vorhandenen Wickel auf der Aufwickelspule 3 eingeführt. Dabei wird das Trennband mit derselben Geschwindigkeit zugeführt, wie das aufzuwickelnde Sägeband. Ggfs. läßt sich die Trennbandspule geringfügig bremsen, um auch bei geringen Schwankungen der Aufwickelgeschwindigkeit unerwünschte Schleifenbildung zu verhindern. Damit wird zwar dem freien Abzug des Trennbandes ein gewisser Widerstand entgegengesetzt, andererseits jedoch ein ungehindertes Ablaufen des Trennbandes vermieden.

Hiervon unterscheidet sich die Ausführung nach Fig.9 darin, daß dort bereits unter Verwendung einer Zwischenlage 7 aufgewickeltes Sägeband lediglich zusammen mit der Zwischenlage 7 abgewickelt und unmittelbar danach auf eine neue Aufwickelhaspel aufgewickelt wird. Hierdurch kann auf einfache Weise erzielt werden, daß die Sägezähne in der Abzugsrichtung die zum Vakuumhärten notwendige Zahnrichtung aufweisen, nämlich mit dem Zahnrücken voran.

Fig.10 zeigt darüber hinaus, daß ein ebenfalls unter Verwendung eines Trennmaterials 7 aufgewickeltes Sägeband 6 abgezogen und der Härteeinrichtung 2 zugeführt wird. Der Abzug des Trennmaterials 7 erfolgt synchron mit dem Abzug des Sägebands 6. Das Trennmaterial 7 wird dabei auf eine Aufwikkelspule geführt und dort als Wickel abgelegt um für einen weiteren Verarbeitungsvorgang zur Verfügung zu stehen.

Bei dem Material des Trennbandes kann es sich bevorzugt um ein relativ dickes Papiermaterial handeln, wobei der innere Zusammenhalt und die Dicke des Trennmaterials so ausgewählt sind, daß eine gegenseitige Berührung der Zahnflanken auch bei Aufwickeln unter hoher Vorspannung zuverlässig vermieden ist.

Ergänzend hierzu zeigt Fig.8 einen Querschnitt aus zwei benachbarten Wickelschichten 9,10 mit einer dazwischen angeordneten Lage eines Trennbandes. Ausgehend von der jeweils mittleren Sägeblattebene 11 sind die Zähne 8 abwechselnd zu beiden Seiten aus der mittleren Sägeblattebene 11 herausgebogen.

Hierdurch entstehen zwischen zwei benachbarten Wickelschichten Bereiche, in denen sich die aufeinander zu gebogenen Zähne berühren können. Um dies zu vermeiden, ist ein bandförmiges Trennmaterial 7 zwischen die benachbarten Wikkelschichten 9 und 10 gelegt. Die Breite des Trennbandes 7 überragt dabei die Breite des Sägebandes. In jedem Falle jedoch soll das Trennband 7 im Bereich der Sägezähne 8 abgelegt sein. Dabei ist die Materialdicke des Trennbandes und der innere Zusammenhalt so ausgewählt, daß die aus der mittleren Sägeblattebene 11 hinausragenden Zähne in das Material des Trennbandes 7 eindringen können, und zwar ohne sich gegenseitig zu berühren. Hierdurch wird nicht nur ein Kontakt der scharfen Sägezahnflanken verhindert, sondern durch das Eindringen der Sägezahnspitzen in das Material des Trennbandes wird dieses auch in seitlicher Richtung festgehalten. Dies ist vorteilhaft bei geringer Aufwickelspannung des Sägebandes, da auf diese Weise unerwünschtes Verrutschen des Trennbandes unterbleibt.

### Bezugzeichenliste:

- 1: Abwickelspule
- 2: Schränkeinrichtung
- 3: Aufwickelspule
- 4: Motor
- 5: Trennbandspule
- 6: Sägeband
- 7: Trennmaterial
- 8: Sägezähne
- 9: erste Wickelschicht
- 10: zweite Wickelschicht
- 11: mittlere Sägeblattebene
- 50: zu schränkendes Sägeblatt
- 51: Zahnfußlinie
- 52: Spannkopf
- 53: Spannkopf
- 54: Schränkeisen
- 55: Schränkeisen
- 56: Zahn
- 57: Grundstellung
- 58: Kopffläche
- 59: Kopfflächenwinkel
- 60: Schränkwinkel
- 61: Anlegepunkt
- 62: Schwenkbewegung
- 63: Schwenkbewegung
- 64: kreisförmige Führungsbahn
- 65: kreisförmige Führungsbahn
- 66: mittlere Sägeblattebene
- 67: Unterseite des Schränkeisens
- 68: Oberseite des Spannkopfes
- 69: Elektromotor
- 70: Zahnriementrieb
- 71: antreibendes Zahnriemenrad
- 72: angetriebenes Zahnriemenrad
- 73: ortsfeste Halterung
- 74: Lagerstelle
- 75: Schränktrommel
- 76: Drehgeber
- 77: Tachogenerator
- 78: Schrittzahlgeber
- 79: 0-Punktgeber
- 80: Ist-Verschränkung
- 81: Soll-Verschränkung
- 82: Sägeblattdicke
- 83: Zahngruppe
- 84: Zahnfehlstelle
- 85: Dickenfehlstelle
- 86: optoelektronisches Auge (Dickenmessung)
- 86a: optoelektronisches Auge (Zahngruppenerfassung)
- 90: Kolbenzylindereinheit
- 91: Kolben
- 92: Kolbenstange
- 93: Druckraum
- 94: Belastungswegeventil
- 95: Entlastungswegeventil
- 96: hydraulische Pumpe
- 97: Tank
- 98: Höheneinstellvorrichtung
- 99: Auswerteschaltung
- 100: Druckleitung

## Patentansprüche

1. Vorrichtung (2) zum Schränken von Sägeblättern (50) mit jeweils beidseits des Sägeblatts (50) angeordneten, das Sägeblatt (50) unterhalb der Zahnfußlinie (51) einspannenden Spannköpfen (52,53), sowie oberhalb der Zahnfußlinie (51) aus beiden Richtungen zum Sägeblatt (50) gegen die Zähne (56) verschwenkbaren Schränkeisen (54,55), **dadurch gekennzeichnet**, daß bei in einer Grundstellung (57) gehaltenen Schränkeisen (54,55)
beide Schränkeisen (54,55) klemmfrei an dem Sägeblatt (50) liegen und mit
ihren den Zähnen (56) zugewandten Kopfflächen (58) zwischen sich einen Kopfflächenwinkel (59) einschließen, der größer als oder höchstens gleich dem Schränkwinkel (60) ist, welcher die geschränkten Zähne (56) einhüllt.

2. Vorrichtung nach Anspruch 1, **dadurch gekennzeichnet**, daß die Bewegungen der Schränkeisen (54,55) lediglich gegenläufige Schwenkbewegungen (62,63) aus der Grundstellung (57) sind, vorzugsweise gleichzeitig.

3. Vorrichtung nach Anspruch 2, **dadurch gekennzeichnet**, daß das Schränkeisen (54,55) jeder Seite auf einer kreisförmigen Führungsbahn (64,65) geführt ist und daß jedes Schränkeisen (54,55) in der Grundstellung (57) entlang einer Anlegelinie (61) am Sägeblatt (50) liegt, wobei die Drehachse der Führungsbahn (64,65) mit der Anlegelinie (61) zusammenfällt.

4. Vorrichtung nach einem der Ansprüche 2 bis 3, **dadurch gekennzeichnet**, daß die den Zähnen (56) zugewandte Oberseite der Spannköpfe (52,53) mit der mittleren Sägeblattebene (60) einen Winkel größer als 90° einschließt, und daß die Schränkeisen (54,55) in Grundstellung (57) mit ihren Unterseiten (67) im wesentlichen parallel zur jeweiligen Oberseite (68) des Spannkopfes (52,53) liegen.

5. Vorrichtung nach einem der Ansprüche 2 bis 4, **dadurch gekennzeichnet**, daß die Schränkeisen (54,55) an jeweils einer Schwenkhalterung sitzen, und daß die Schwenkbewegungen (62,63) von einem Elektromotor (69) über einen Zahnriementrieb (70) erzeugt werden, der an der Schwenkhalterung angreift.

6. Vorrichtung nach Anspruch 5, **dadurch gekennzeichnet**, daß der Elektromotor (69) ein Drehstrom-Servomotor ist, der von einem Drehgeber (76) angesteuert ist und dessen Schwenkbewegung über einen Tachogenerator (77) mit der Sollschwenkbewegung verglichen und überwacht wird.

7. Vorrichtung nach Anspruch 5 oder 6, **dadurch gekennzeichnet**, daß beidseits der mittleren Sägeblattebene (66) die Ist-Verschränkung (80) erfaßt und durch Vergleich mit einer vorgegebenen Soll-Verschränkung (81) ausgeregelt wird.

8. Vorrichtung nach Anspruch 7, **dadurch gekennzeichnet**, daß zusätzlich zur Ist-Verschränkung (80) auch die Dicke (82) des Sägeblatts erfaßt wird.

9. Vorrichtung nach Anspruch 7 oder 8, **dadurch gekennzeichnet**, daß hinsichtlich der Verzahnung (56,83) eine Fehlstellenüberwachung (84,85) durchgeführt und daß bei Fehlstelle (84,85) ein Warnsignal ausgegeben und/oder die Vorrichtung zum Schränken (2) stillgesetzt wird.

10. Vorrichtung nach einem der Ansprüche 1 bis 9, **dadurch gekennzeichnet**, daß die Spannköpfe (52,53) hydraulisch beaufschlagt werden.

11. Vorrichtung nach einem der Ansprüche 1 bis 10, **dadurch gekennzeichnet**, daß Schränkvorrichtung (2) und Sägeblatt (50) in Höhenrichtung relativ zueinander verstellbar sind (98).

12. Vorrichtung nach einem der Ansprüche 1 bis 11, **dadurch gekennzeichnet**, daß zum Schränken eines Sägebandes (6) eine Abwickelspule (1) vor-, sowie eine Aufwickelspule (3) nachgeordnet sind, vorzugsweise wobei das Sägeband (6) hinter der Schränkeinrichtung (2) durch eine Fördereinrichtung gezogen wird.

13. Vorrichtung nach Anspruch 12, **dadurch gekennzeichnet**, daß eine abwickelbare Trennbandspule (5) vorgesehen ist, von welcher das Trennmaterial (7) abgezogen und im wesentlichen zugleich mit dem Sägeband (6) aufgewickelt wird.

14. Vorrichtung nach Anspruch 13, **dadurch gekennzeichnet**, daß die Achse der Trennbandspule (5) parallel zur Achse der Aufwickelspule (3) liegt.

15. Vorrichtung nach Anspruch 13 oder 14, **dadurch gekennzeichnet,** daß die Trennbandspule (5) frei drehend gelagert ist.

16. Vorrichtung nach Anspruch 15, **dadurch gekennzeichnet**, daß Ablaufbremsen vorgesehen sind, welche eine derart entgegen der Ablaufrichtung wirkende Bremskraft aufbringen, daß auch bei unregelmäßiger Aufwickelgeschwindigkeit ein Überschießen des Trennmaterials (7) unterbleibt.

## Claims

1. Device (2) for the purpose of setting saw blades (50) having clamping heads (52, 53) which are disposed in each case on both sides of the saw blade (50) and clamp the saw blade (50) below the tooth base line (51), and having saw sets (54, 55) which can pivot against the teeth (56) above the tooth base line (51) from both directions towards the saw blade (50), characterised in that in the case of saw sets (54, 55) which are held in a starting position (57), both saw sets (54, 55) lie against the saw blade (50) without jamming and with their head surfaces (58) facing the teeth (56) said saw sets include between themselves a head surface angle (59) which is greater than or at most equal to the fleam (60) covering the set teeth (56).

2. Device according to claim 1, characterised in that the movements of the saw sets (54, 55) are only opposed pivot movements (62, 63) from the starting position (57), preferably at the same time.

3. Device according to claim 2, characterised in that the saw set (54, 55) on each side is guided on a circular guide track (64, 65) and that in the starting position (57) each saw set (54, 55) lies along a feeding line (61) against the saw blade (50), wherein the rotational axis of the guide track (64, 65) coincides with the feeding line (61).

4. Device according to any one of the claims 2 to 3, characterised in that the upper side, facing the teeth (56), of the clamping heads (52, 53) together with the middle saw blade plane (60) includes an angle greater than 90°, and that in the starting position (57) the saw sets (54, 55) lie with their lower sides (67) substantially parallel with the respective upper side (68) of the clamping head (52, 53).

5. Device according to any one of the claims 2 to 4, characterised in that the saw sets (54, 55) are each positioned on a pivot holding device, and that the pivot movements (62, 63) are produced by an electromotor (69) via a synchronous belt drive (70) which acts upon the pivot holding device.

6. Device according to claim 5, characterised in that the electromotor (69) is a rotary current servomotor which is controlled by a rotary transmitter (76) and whose pivot movement is monitored via a tacho-generator (77) and compared with the desired pivot movement.

7. Device according to claim 5 or 6, characterised in that on both sides of the middle saw blade plane (66), the actual setting arrangement (80) is detected and rectified by virtue of a comparison with a predetermined desired setting arrangement (81).

8. Device according to claim 7, characterised in that in addition to the actual setting arrangement (80) being detected, the thickness (82) of the saw blade is also detected.

9. Device according to claim 7 or 8, characterised in that an incorrect position monitoring process (84, 85) is performed on the toothing arrangement (56, 83) and that in the event of an incorrect position (84, 85) being established, a warning signal is transmitted and/or the setting device (2) is shut off.

10. Device according to any one of the claims 1 to 9, characterised in that the clamping heads (52, 53) are influenced in a hydraulic manner.

11. Device according to any one of the claims 1 to 10, characterised in that the setting device (2) and the saw blade (50) can be adjusted (98) relative to each other in the height direction.

12. Device according to any one of the claims 1 to 11, characterised in that in order to set a saw band (6), an unwinding reel (1) is disposed upstream and a winding reel (3) is disposed downstream, preferably wherein the saw band (6) is pulled behind the setting device (2) by virtue of a conveying device.

13. Device according to claim 12, characterised in that there is provided a separating band reel (5) which can be unwound and of which the separating material (7) is drawn off and wound up substantially simultaneously with the saw band (6).

14. Device according to claim 13, characterised in that the axis of the separating band reel (5) lies in parallel with the axis of the winding reel (3).

15. Device according to claim 13 or 14, characterised in that the separating band reel (5) is mounted in a freely rotating manner.

16. Device according to claim 15, characterised in that run-off brakes are provided which apply a braking force which is effective in the opposite direction to the run-off direction such that even in the event of irregular winding speeds, the separating material (7) is prevented from overshooting.

## Revendications

1. Dispositif (2) pour donner de la voie à des lames de scie (50), comportant des têtes de serrage (52, 53) qui sont disposées des deux côtés de la lame de scie (50) et qui serrent celle-ci au-dessous de la ligne de creux de dents (51), et des fers à avoyer (54, 55) qui sont aptes à pivoter au-dessus de la ligne de creux de dents (51) à partir des deux directions par rapport à la lame de scie (50), vers les dents (56), **caractérisé** en ce que
les deux fers à avoyer (54, 55), lorsqu'ils sont maintenus dans la position de base (57), sont appliqués contre la lame de scie (50) sans coincement et
définissent entre eux, avec leurs surfaces supérieures (58) tournées vers les dents (56), un angle de surfaces supérieures (59) qui est égal ou au maximum supérieur à l'angle d'avoyage (60) couvert par les dents (56) avoyées.

2. Dispositif selon la revendication 1, **caractérisé** en ce que les mouvements des fers à avoyer (54, 55) sont simplement des mouvements pivotants contraires (62, 63) à partir de la position de base (57), de préférence simultanés.

3. Dispositif selon la revendication 2, **caractérisé** en ce que le fer à avoyer (54, 55) de chaque côté est guidé sur une glissière de guidage circulaire (64, 65), et en ce que chaque fer à avoyer (54, 55), dans la position de base (57), est appliqué contre la lame de scie (50) le long d'une ligne d'application (61), l'axe de rotation de la glissière de guidage (64, 65) coïncidant avec ladite ligne d'application (61).

4. Dispositif selon la revendication 2 ou 3, **caractérisé** en ce que le côté supérieur des têtes de serrage (52, 53) tourné vers les dents (56) définit avec le plan de lame de scie médian (66) un angle supérieur à 90°, et en ce que les fers à avoyer (54, 55), dans leur position de base (57), sont globalement parallèles, avec leur côté inférieur (67), au côté supérieur correspondant (68) de la tête de serrage (52, 53).

5. Dispositif selon l'une des revendications 2 à 4, **caractérisé** en ce que les fers à avoyer (54, 55) se trouvent sur des fixations pivotantes respectives, et en ce que les mouvements pivotants (62, 63) sont générés par un moteur électrique (69) par l'intermédiaire d'une transmission à courroie dentée (70) qui agit sur la fixation pivotante.

6. Dispositif selon la revendication 5, **caractérisé** en ce que le moteur électrique (69) est un servomoteur triphasé qui est commandé par un transmetteur de position angulaire (76) et dont le mouvement pivotant est comparé au mouvement pivotant théorique et surveillé par l'intermédiaire d'une génératrice tachymétrique (77).

7. Dispositif selon la revendication 5 ou 6, **caractérisé** en ce que des deux côtés du plan de lame de scie médian (66), l'avoyage réel (80) est détecté et est réglé grâce à une comparaison avec un avoyage théorique prédéfini (81).

8. Dispositif selon la revendication 7, **caractérisé** en ce que l'épaisseur (82) de la lame de scie est enregistrée en plus de l'avoyage réel (80).

9. Dispositif selon la revendication 7 ou 8, **caractérisé** en ce qu'une surveillance de défauts (84, 85) est effectuée pour la denture (56, 83), et en ce que dans le cas d'un défaut (84, 85), un signal d'avertissement est émis et/ou le dispositif d'avoyage (2) est arrêté.

10. Dispositif selon l'une des revendications 1 à 9, **caractérisé** en ce que les têtes de serrage (52, 53) sont contraintes par voie hydraulique.

11. Dispositif selon l'une des revendications 1 à 10, **caractérisé** en ce que le dispositif d'avoyage (2) et la lame de scie (50) sont mobiles (98) en hauteur l'un par rapport à l'autre.

12. Dispositif selon l'une des revendications 1 à 11, **caractérisé** en ce que pour l'avoyage d'une scie en bande (6), une bobine de déroulement (1) est disposée en amont et une bobine d'enroulement (3) est disposée en aval, la scie en bande (6) étant de préférence tirée par un dispositif formant convoyeur, derrière le dispositif d'avoyage (2).

13. Dispositif selon la revendication 12, **caractérisé** en ce qu'il est prévu une bobine de bande de séparation (5) apte à être dévidée, à partir de laquelle le matériau de séparation (7) est déroulé et est enroulé pratiquement en même temps que la scie en bande (6).

14. Dispositif selon la revendication 13, **caractérisé** en ce que l'axe de la bobine de bande de séparation (5) est parallèle à l'axe de la bobine d'enroulement (3).

15. Dispositif selon la revendication 13 ou 14, **caractérisé** en ce que la bobine de bande de séparation (5) est montée pour tourner librement.

16. Dispositif selon la revendication 15, **caractérisé** en ce qu'il est prévu des freins de déroulement qui appliquent une force de freinage agissant à l'encontre du sens de déroulement de telle sorte que même avec une vitesse d'enroulement irrégulière, il n'y a pas de débordement du matériau de séparation (7).
